Europäisches Patentamt

(19) European Patent Office

Office européen des brevets

(11) Numéro de publication: **0 115 362**
**B1**

(12) **FASCICULE DE BREVET EUROPÉEN**

(45) Date de publication du fascicule du brevet:
10.06.87

(21) Numéro de dépôt: **84200066.3**

(22) Date de dépôt: **20.01.84**

(51) Int. Cl.⁴: **H 04 M 1/72**

(54) Dispositif de communication téléphonique par liaison radioélectrique.

(30) Priorité: **24.01.83 FR 8301036**

(43) Date de publication de la demande:
**08.08.84 Bulletin 84/32**

(45) Mention de la délivrance du brevet:
**10.06.87 Bulletin 87/24**

(84) Etats contractants désignés:
**DE FR GB SE**

(56) Documents cité:
**WO-A-82/03517**
**DE-B-1 226 650**
**US-A-4 332 981**

**29th IEEE VEHICULAR TECHNOLOGY
CONFERENCE, 27-30 mars 1979, Arlington Heights,
Illinois, pages 159-162, IEEE, New York, US. K.
YAMADA et al.: "2GHz-band cordless telephone
system"**

(73) Titulaire: **PORTENSEIGNE, 50 rue Roger Salengro
Péripole 114, F-94126 Fontenay- sous- Boix Cedex
(FR)**

(84) Etats contractants désignés: **FR**

(73) Titulaire: **N.V. Philips' Gloeilampenfabrieken,
Groenewoudseweg 1, NL- 5621 BA Eindhoven (NL)**

(84) Etats contractants désignés: **DE GB SE**

(72) Inventeur: **Himmelbauer, Alain Jacques, Société
Civile S.P.I.D. 209 Rue de l'Université, F-75007
Paris (FR)**
Inventeur: **Poubelle, Régis Jacques Paul, Société
Civile S.P.I.D. 209 Rue de l'Université, F-75007
Paris (FR)**

(74) Mandataire: **Landousy, Christian, Société Civile
S.P.I.D. 209, Rue de l'Université, F-75007 Paris
(FR)**

LIBER, STOCKHOLM 1987

## Description

La présente invention concerne un dispositif de communication téléphonique par liaison radioélectrique composé d'une base et d'un mobile qui constituent respectivement la partie fixe du dispositif et sa partie déplaçable à volonté, ladite base comprenant un module d'interface pour le raccordement au réseau et un module radioélectrique pour l'émission vers le mobile des signaux en provenance du réseau et, réciproquement, la réception et le transfert vers ce réseau des signaux en provenance du mobile, et ledit mobile comprenant un module radioélectrique pour l'émission vers la base des signaux de conversation et la réception des signaux en provenance du réseau par l'intermédiaire de la base.

On connaît déjà des dispositifs permettant l'établissement de liaisons téléphoniques sans aucun cordon entre l'équipement de base, ou socle, et le combiné, qui de ce fait a l'avantage d'être réellement mobile. Il y a lieu, cependant, de distinguer deux types de dispositifs de communication téléphonique sans cordon: d'une part ceux, tout à fait classiques, pour lesquels le numérotation s'effectue sur l'équipement de base, les appels et fins de communication n'étant rendus possibles que par le désaccouplement et le réaccouplement de cet équipement de base et de la partie mobile, et d'autre part ceux, plus récents, pour lesquels les appels, numérotations et fins de communication peuvent être effectués à partir de la partie mobile. L'invention qui fait l'objet de la présente demande appartient à cette deuxième catégorie de dispositifs.

Un tel dispositif est par exemple décrit dans le brevet US-A-4 332 981. Le circuit de codage prévu dans ce dispositif n'est cependant destiné qu'à permettre la reconnaissance par la base des différents mobiles en parallèle auxquels elle peut être reliée, en évitant la complexité des réalisations précédentes qui ne pouvaient atteindre cet objectif qu'en assurant la transmission d'autant de porteuses distinctes que de mobiles à connecter.

Le but de l'invention est de proposer un dispositif de communication téléphonique dans lequel une utilisation frauduleuse de la base ou du mobile qui lui est associé, à partir d'une autre base ou d'un autre mobile, est interdite.

A cet effet, le dispositif selon l'invention est caractérisé en ce que la base comprend un premier module de gestion composé lui-même d'un premier microprocesseur et d'une première mémoire, en ce que le mobile comprend un deuxième module de gestion composé lui même d'un clavier de programmation, d'un deuxième microprocesseur et d'une deuxième mémoire, en ce que la base et le mobile comprennent chacun un multiplexeur ainsi qu'un contact pour leur raccordement mutuel pendant la mise en mémoire préalable par l'utilisateur, à partir du clavier de programmation du mobile, d'un code personnel qui lui est propre et qui est stocké dans les mémoires et de la base et du mobile, ce code personnel permettant de ne valider qu'exclusivement les communications qui s'établissent entre ledit mobile et ladite base, et en ce que ces mémoires sont électriquement effaçables et reprogrammables.

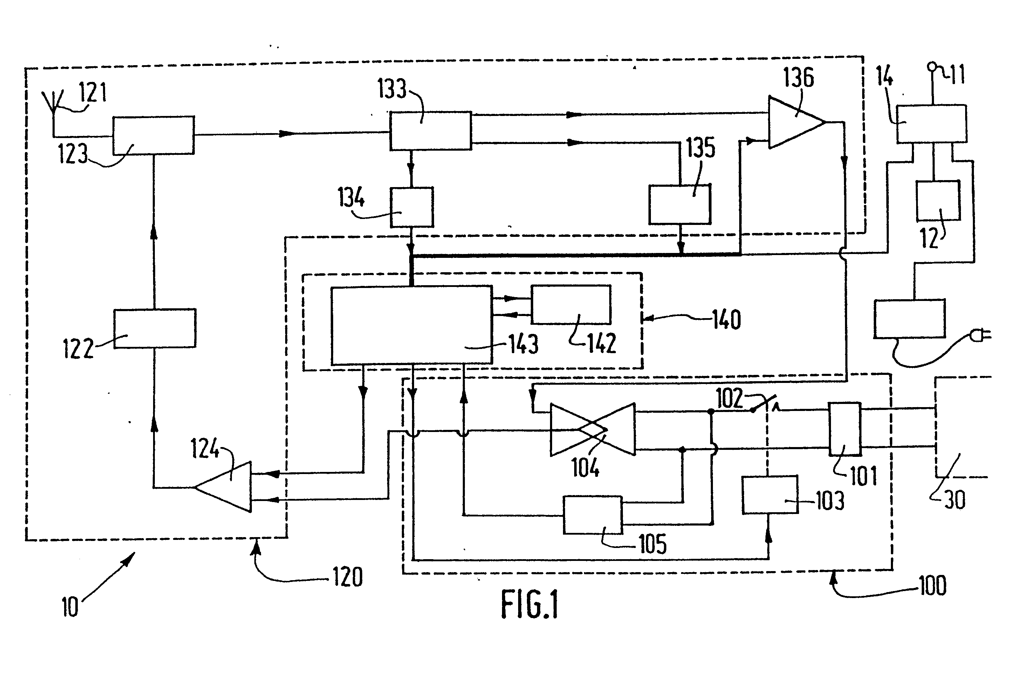

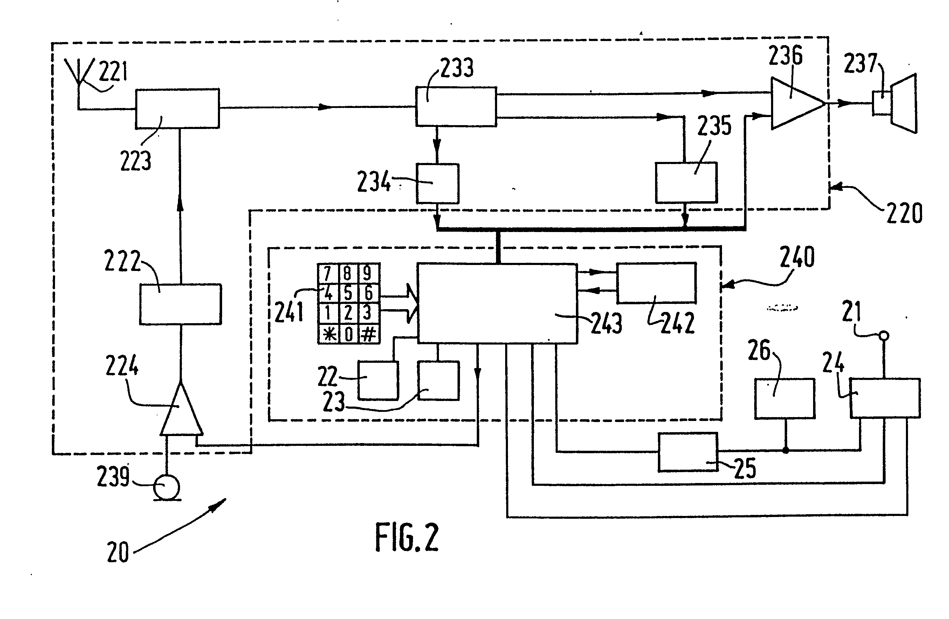

Les particularités et avantages de l'invention apparaitront maintenant de façon plus détaillée dans la description qui suit et dans les dessins annexés, donnés à titre d'exemples non limitatifs et dans lesquels les figures 1 et 2 representent respectivement la partie fixe, ou base, et la partie déplaçable, ou mobile, du dispositif.

Ce dispositif selon l'invention est constitué d'une partie fixe, appelée base, raccordée au réseau téléphonique classique, et d'une partie déplaçable, appelée mobile, constituant un poste téléphonique complet. Cette base, référencée 10 et représentée sur la figure 1, est elle-même composée d'un certain nombre de modules: module d'interface 100, premier module radioélectrique 120, premier module de gestion 140. De même, le mobile, référencé 20 et représenté sur la figure 2, comprend un deuxième module radioélectrique 220 et un deuxième module de gestion 240.

Pour le fonctionnement de ce dispositif, on peut distinguer trois sortes de procédures, qui seront successivement décrites: la programmation d'un code personnel (correspondant à un utilisateur et un seul, et choisi par lui), la réception d'un appel, l'envoi d'un appel.

La mise en service du dispositif étant assurée par raccordement de la base 10 sur le réseau téléphonique 30 et sur le secteur de distribution de courant, la programmation préalable d'un code personnel n'est possible d'une part que si le mobile 20 est en position dite de charge, c'est-à-dire raccordé à la base par l'intermédiaire d'un multiplexeur 24 et d'un contact 21 (le contact correspondant dans la base, auquel est également associé un multiplexeur 14, état référencé 11), et d'autre part que si le basculement en fonction "programmation" a été effectué à l'aide d'un contact 12 prévu dans la base pour commander le positionnement approprié des multiplexeurs 14 et 24. L'utilisateur frappe alors sur un clavier de programmation 241, prévu sur le mobile 20, le nombre choisi par lui seul (ici un nombre à six chiffres) qui va constituer son code personnel secret. Une fois le dernier chiffre frappé, l'émission d'un signal sonore avertit que la programmation est terminée et que les chiffres composant le code personnel ont été stockés dans des mémoires 142 et 242 prévues dans la base 10 et dans le mobile 20 respectivement; la particularité de ces mémoires est d'être électriquement effaçables et reprogrammables (mémoires dites EAROM ou EEROM). Après avoir ramené le multiplexeur 14 en position "repos", le dispositif est opérationnel (il ne deviendrait indispensable d'effectuer une nouvelle programmation qu'en cas d'appropriation frauduleuse ou accidentelle du code personnel par une personne non autorisée), aussi bien pour émettre un appel que pour en recevoir. Pour l'une comme pour l'autre de ces deux opérations, le mobile 20 peut, ou non, être en position de raccordement à la base 10 (en fait, le plus souvent, le mobile ne le sera pas). On supposera par la suite que le mobile est effectivement à une certaine distance de la base, et en état de veille, caractérisé par la mise en position "marche" d'un contacteur marche-arrêt 22 et la mise en position "veille" d'un contacteur veille-trafic 23.

Si un appel d'un correspondant extérieur arrive donc par le réseau téléphonique sur la base 10, une tension de valeur élevée (ici supérieure à 50 volts), à la fréquence du secteur, est reçue par un détecteur de sonnerie 105, qui renvoie cette information au microprocesseur 143. Ce dernier prélève le code personnel situé dans la mémoire 142 (en fait, à chaque mise sous tension du dispositif, le code est systématiquement transféré de cette mémoire 142 dans la mémoire vive volatile du microprocesseur) et le transmet vers l'antenne 121 par l'intermédiaire d'un amplificateur 124, d'un émetteur haute fréquence 122 et d'un coupleur d'antenne 123. Ce signal, reçu dans le mobile par un récepteur haute fréquence 233, est transmis par l'intermédiaire d'un circuit de mise en forme 235 à un microprocesseur 243 qui compare le code reçu au code range dans la mémoire 242 (en réalité, remis comme précédemment dans la mémoire vive volatile du microprocesseur à chaque mise sous tension). Si ces deux codes sont identiques, le microprocesseur 243 envoie vers l'amplificateur 236 la commande d'excitation d'un haut-parleur 237 simulant dans le mobile la sonnerie d'appel, tandis que l'émetteur 122 de la base s'arrête et que son récepteur 133 se met à l'écoute éventuelle de la fréquence de retour.

L'utilisateur qui capte l'appel le signale en basculant sur le mobile le contact veille/trafic 23 en position "trafic", et le microprocesseur 243 commande l'envoi d'un signal radioélectrique codé correspondant à l'information "appel capté" vers l'antenne 221, par l'intermédiaire d'un amplificateur 224, d'un émetteur haute fréquence 222 et du coupleur d'antenne 223. Le signal ainsi transmis arrive au récepteur de la base 10, puis est mis en forme dans un circuit 135 avant d'être fourni en tant que signal de données au microprocesseur 143 qui identifie le numéro ainsi reçu et autorise l'accès au réseau téléphonique 30 (par l'intermédiaire de l'amplificateur 136) si le code est exact. Cet accès se traduit par l'arrêt de la somerie, ainsi que la fermeture du contact de ligne 102 par l'intermédiaire du circuit d'interface 103 (ce qui avertit le central téléphonique de la prise de la ligne pour une communication, pour mise en liaison de l'appelant et de l'appelé).

La modulation basse fréquence du poste appelé, venant du microphone 239 du mobile, est transmise à la base par l'intermédiaire de l'amplificateur 224, de l'émetteur 222, du coupleur d'antenne 223 et de l'antenne 221, puis reçue dans le récepteur 133 de la base et transmise au réseau téléphonique 30 par l'intermédiaire du circuit 104 de couplage 2 fils/4 fils. La modulation venant de la ligne téléphonique -c'est-à-dire de l'appelant- est transmise par l'intermédiaire de ce même circuit 104 à l'amplificateur 124, à l'émetteur 122 de la base, puis à l'antenne 121 par l'intermédiaire du coupleur d'atenne 123. Le signal radioélectrique ainsi transmis parvient au récepteur 233 du mobile puis est transmis au haut-parleur 237 par l'intermédiaire de l'amplificateur 236. Si, pour clore la communication, c'est l'appele qui ramène le contact veille-trafic 23 en position "veille", le microprocesseur 243 transmet vers la base le code personnel accompagné d'une information d'identification de fin de communication; si c'est l'appelant qui raccroche, l'appelé, entendant la tonalité correspondente, n'a plus qu'à reccrocher lui-même, à son tour, en ramenant le contact veille-trafic 23 sur la position "veille".

Pour un appel vers l'extérieur, à l'initiative du mobile, le processus est similaire. Pour marquer son intention d'appel, l'appelant bascule le contact veille-trafic 23 en position "trafic", ce qui commande l'émission vers la base du code personnel. Ce dernier est vérifié par le microprocesseur 143 de la base, par comparaison avec celui qui est en mémoire dans la base, et, s'il y a identité de ces codes, l'accès au réseau téléphonique 30 est autorisé et la tonalité correspondante est alors audible dans l'écouteur 237 du mobile. L'appelant compose le numéro du correspondant par pression sur les touches appropriées du clavier 241, les chiffres de ce numéro étant transmis vers la base en même temps qu'une fraction du code personnel (dans d'autres modes de réalisation, ce pourrait être avec le code en entier) afin d'éviter la numérotation frauduleuse ou accidentelle d'une base par un autre mobile. A la fin de la communication ainsi obtenue, un retour du contact veille-trafic 23 en position "veille" provoque l'émission du code personnel accompagné d'une information d'interruption de la communication, et, par suite, libère la ligne téléphonique.

Dans la base et dans le mobile sont prévus des circuits 134 et 234 de détection de porteuse. Lorsque ces circuits ne détectent plus la présence d'une porteuse, la ligne est libérée au bout d'un temps plus ou moins long. De telles conditions se produisent si base et mobile sortent de la zone de portée utile ou si une avarie d'alimentation (la décharge des batteries par exemple) rendent impossible la transmission du code d'interruption de communication.

Il est utile, également, de prévoir dans la base 10 ou le mobile 20, des circuits auxiliaires tels que par exemple, à l'entrée du module d'interface 100 de la base, un circuit de protection 101 incluant fusibles et parafoudre, ou encore, dans le mobile, un circuit 25 d'indication de l'état de charge ou de décharge de la batterie 26 de ce mobile.

**Revendications**

1. Dispositif de communication téléphonique par lisison radioélectrique composé d'une base (10) et d'un mobile (20) qui constituent respectivement la partie fixe du dispositif et sa partie déplaçable à volonté, ladite base comprenant un module d'interface (100) pour le raccordement au réseau (30) et un module radioélectrique (120) pour l'émission vers le mobile des signaux en provenance du réseau et, réciproquement, la réception et le transfert vers ce réseau des signaux en provenance du mobile, et ledit mobile comprenant un module radioélectrique (220) pour l'émission vers la base des signaux de conversation et la réception des signaux en provenance du réseau par l'intermédiaire de la base, ledit dispositif étant caractérisé en ce que la base (10) comprend un premier module de gestion (140) composé lui-même d'un premier microprocesseur (143) et d'une première mémoire (142), en ce que le mobile (20) comprend un deuxième module de gestion (240) composé lui même d'un clavier de programmation (241), d'un deuxième microprocesseur (243) et d'une deuxième mémoire (242), en ce que la base (10) et le mobile (20) comprennent chacun un multiplexeur (14, 24) ainsi qu'un contact (11, 21) pour leur raccordement mutuel pendant la mise en mémoire préalable par l'utilisateur, à partir du clavier de programmation du mobile, d'un code personnel qui lui est propre et qui est stocké dans les mémoires (142) et (242) de la base et du mobile, ce code personnel permettant de ne valider qu'exclusivement les communications qui s'établissent entre ledit mobile et ladite base, et en ce que ces mémoires (142) et (242) sont électriquement effaçables et reprogrammables.

2. Dispositif selon la revendication 1, caractérisé en ce que, en cas d'appel envoyé vers un correspondant, la liaison électrique qui assure le transfert du numéro d'appel de ce correspondant assure simultanément la transmission de tout ou fraction du code personnel du mobile (20) vers la base (10).

**Patentansprüche**

1. Anordnung zur Fernsprechverbindung durch Funkverbindung, wobei diese Anordnung aus einer Basisstation (10) und einer beweglichen Station (20) besteht, die den ortsfesten Teil bzw. den ggf. ortsbeweglichen Teil bilden, wobei die genannte Basisstation einen Schnittstellenbaustein (100) aufweist zur Verbindung mit dem Fernsprechnetz (30) sowie einen Funkbaustein (120) zum zu der beweglichen Station Aussenden von Signalen die von dem Fernsprechnetz herrühren und umgekehrt zum Empfangen und zu dem Fernsprechnetz Weiterleiten von Signalen die von der beweglichen Station herrühren, wobei die genannte bewegliche Station einen Funkbaustein (220) aufweist zum zu der Basisstation Aussenden von Sprechsignalen und zum Empfangen von Signalen, die über die Basisstation von dem Fernsprechnetz herrühren, wobei die genannte Anordnung das Kennzeichen aufweist, dass die Basisstation (10) einen ersten Bearbeitungsteil (140) aufweist, der an sich aus einem ersten Mikroprozessor (143) und einem ersten Speicher (142) besteht, dass die bewegliche Station (20) einen zweiten Bearbeitungsteil (240) aufweist, der an sich aus einer Programmierungstastatur (241), einem zweiten Mikroprozessor (243) und einem zweiten Speicher (242) besteht, dass die Basisstation (10) und die bewegliche Station (20) je einen Multiplexer (14, 24) aufweisen, ebenso wie einen Kontakt (11, 21) zu ihrer gegenseitigen Verbindung während der vorhergehenden Speicherung durch den Gebraucher mittels der Programmierungstastatur der beweglichen Station und eines persönlichen, dem Benutzer eigenen und in den Speichern (142) und (242) der Basisstation und der beweglichen Station gespeicherten Kodes, wodurch nur Kommunikation zwischen der genannten beweglichen Station und der genannten Basisstation möglich ist und dass diese Speicher (142) und (242) elektrisch löschbar und neuprogrammierbar sind.

2. Anordnung nach Anspruch 1, dadurch gekennzeichnet, dass im Falle eines Anrufes zu einer angerufenen Station die elektrische Verbindung, welche die Übertragung der Rufnummer der angerufenen Station gewährleistet, gleichzeitig die Übertragung des ganzen persönlichen Kodes oder eines Teils desselben von der beweglichen (20) zu der Basisstation (10) gewährleistet.

**Claims**

1. An arrangement for telephone communciation by means of a radio link, the arrangement being formed by a base unit (10) and a mobile unit (20) which constitute the fixed part of the arrangement and its optionally movable part, respectively, the base unit comprising primarily an interface module (100) for the connection to the telephone network (30) and a radio-electric module (120) for transmitting to the mobile unit signals coming from the telephone network and for receiving and conveying to this network signals coming from the mobile unit, and the aforesaid mobile unit comprising a radio-electric module (220) for transmitting speech signals to the base unit and for receiving signals coming from the telephone network via the base unit, the aforesaid arrangement being characterized in that the base unit (10) comprises a first processing module (140) itself formed by a first microprocessor (143) and a first memory (142), in that the mobile unit (20) comprises a second processing module (240) itself formed by a programming keyboard (241), a second mircoprocessor (243) and a second memory (242), in that the base unit (10) and the mobile unit (20) each comprise a multiplexer (14, 24) as well as a contact (11, 21) for interconnecting them during the previous storing in the memory by the user via the programming keyboard of the mobile unit of a personal, characteristic code which is stored in the memories (142) and (242) of the base and the mobile units, this personal code making it possible that the communications only between said mobile unit and said base unit are enabled, and in that these memories (142) and (242) are electrically erasable and reprogrammable.

2. An arrangement as claimed in Claim 1, characterized in that in the case of a call sent to a person called, the electric link which ensures the transmission of the call number of this called person simultaneously ensures the transmission of the entire, or a fraction of, the personal code from the mobile unit (20) to the base unit (10).

FIG.1

FIG.2